# EUROPÄISCHE PATENTSCHRIFT

(11) **EP 2 930 094 B1**
(45) Veröffentlichungstag und Bekanntmachung des Hinweises auf die Patenterteilung: **06.05.2020**
(21) Anmeldenummer: 15162944.1
(22) Anmeldetag: 09.04.2015
(51) Int. Cl.: B62K 21/02, B62K 21/04, B62K 19/16, B62K 19/22

(54) **GABELKOMPONENTE FÜR EIN WENIGSTENS TEILWEISE MUSKELBETRIEBENES FAHRRAD**
FORK COMPONENTS FOR A BICYCLE THAT IS AT LEAST PARTIALLY POWERED BY MUSCLE POWER
COMPOSANT DE FOURCHE POUR UN VÉLO ENTRAÎNÉ AU MOINS PARTIELLEMENT PAR LA force MUSCULAIRE

(30) Priorität: 09.04.2014 DE 102014105049
(43) Veröffentlichungstag der Anmeldung: 14.10.2015
(73) Patentinhaber: DT Swiss AG, 2504 Biel (CH)
(72) Erfinder: Achenbach, Martin, 2504 Biel/Bienne (CH); Walthert, Martin, 3270 Aarberg (CH); Wendel, Valentin, 2502 Biel (CH)
(74) Vertreter: BSB Patentanwälte Schütte & Engelen Partnerschaft mbB

(56) Entgegenhaltungen:
- EP-A1- 2 441 654
- CN-Y- 2 488 800
- DE-C- 802 680
- FR-A1- 2 778 624
- FR-A3- 2 808 494
- JP-U- H01 144 292
- US-A1- 2010 117 330
- US-B1- 7 503 576

## Beschreibung

Die vorliegende Erfindung betrifft eine Gabelkomponente für ein wenigstens teilweise muskelbetriebenes Fahrzeug und insbesondere ein Fahrrad. Auch und gerade bei Fahrrädern wird versucht, das Gewicht des gesamten Fahrrads und der einzelnen Bauteile immer weiter zu verringern, um die Agilität und das Beschleunigungsverhalten beim Fahren zu verbessern.

Aus dem Stand der Technik sind Gabeln für Fahrräder bekannt geworden, die aus Stahl bestehen. Solche Gabeln funktionieren an sich zuverlässig, weisen aber ein hohes Gewicht auf. Deshalb sind auch Gabeln bekannt geworden, die aus Aluminium bzw. Aluminiumlegierungen bestehen, um Gewicht einzusparen. Solche aus Aluminium bestehenden Gabeln weisen in der Regel zwei Gabelbeine auf, um an den Ausfallenden der Gabel das Vorderrad aufzunehmen. Die Gabelbeine können in einer separaten Gabelkrone gehalten werden. Zwischen den Gabelbeinen ist an der Gabelkrone ein Schaftrohr befestigt, welches drehbar an dem Steuerrohr des Fahrradrahmens aufgenommen ist und zur Übertragung der Lenkbewegungen von dem Lenker auf die Gabel und somit das Vorderrad dient.

Durch die Verwendung von Aluminium als Werkstoff zur Herstellung von Gabeln von Fahrrädern konnte das Gewicht bereits erheblich reduziert werden. Gabeln aus Stahl oder Aluminium bestehen aus mehreren Komponenten, die miteinander verpresst oder verklemmt werden, damit die auftretenden Kräfte zuverlässig übertragen werden. Die CN 2 488 800 Y zeigt zum Beispiel eine derartige Gabel, bei welcher am Schaftrohr Stifte zur Verdrehsicherung angebracht sind. Die DE 802 680 zeigt z. B. eine Rohrmuffenverbindung für Fahrradrahmen aus Stahl. Die Rohre sind über einen Teil ihrer Verbindungslänge mit einem Presssitz ineinander geschoben und über einen anderen Teil ihrer Verbindungslänge mittels eines Klebemittels verbunden. Um die Übertragung der nötigen Kräfte sicherzustellen, müssen an den Verbindungsstellen größere Wandstärken eingesetzt werden, die nicht nur die normale im Betrieb auftretende Belastung abfangen, sondern die auch jederzeit genügende Klemmkräfte zur Verfügung stellen. Das führt trotz der verwendeten leichten Materialien zu einem immer noch erhöhten Gewicht.

Zur weiteren Gewichtsersparung ist es deshalb bekannt geworden, Gabeln aus Faserverbundwerkstoff herzustellen. So sind einteilig gefertigte Fahrradgabeln aus Faserverbundwerkstoff bekannt geworden, die ein besonders geringes Gewicht ermöglichen. Außerdem kann durch die einteilige Fertigung eine Optimierung der Gewebelagen erfolgen, sodass nur dort Fasergewebe eingesetzt wird, wo es von der Stabilität her benötigt wird, was das Gewicht weiter reduziert.

Es hat sich aber herausgestellt, dass es bei den verwendeten manuellen Herstellprozessen zu Ungenauigkeiten bei der Positionierung der verwendeten Fasermatten oder Prepregs kommen kann, sodass doch mehr Lagen verwendet werden müssen als von der Stabilität theoretisch erforderlich wäre. Eine zweiteilige Gabel mit einem Schaftrohr aus in Kunstharz eingebetteten Kohlefasern und einer Gabelkrone aus Aluminium ist in der US 7503576 B1 gezeigt.

Es ist deshalb die Aufgabe der vorliegenden Erfindung, eine Gabelkomponente für wenigstens teilweise muskelbetriebene Fahrräder zur Verfügung zu stellen, mit der ein geringes Gesamtgewicht bei einer hohen Stabilität ermöglicht wird.

Diese Aufgabe wird durch eine Gabelkomponente mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Gabelkomponente für ein wenigstens teilweise muskelbetriebenes Fahrzeug und insbesondere Fahrrad umfasst eine wenigstens teilweise aus Faserverbundwerkstoff bestehende Schaftrohreinheit. Die Schaftrohreinheit umfasst ein Schaftrohr und eine Gabelkrone, welche als zwei separate und formschlüssig miteinander zu einer Schaftrohreinheit verbundene Teile ausgebildet sind. Dabei sind relativ zur Längsachse das Schaftrohr und die Gabelkrone verdrehsicher an einem Aufnahmeabschnitt der Gabelkrone miteinander verbunden. Das Schaftrohr weist an einem Aufnahmebereich wenigstens eine nach außen abstehende Nase auf. Die Gabelkrone weist eine Wandung aus einem Faserverbundwerkstoff und wenigstens einen Kern aus einem leichteren Material auf.

Die erfindungsgemäße Gabelkomponente hat erhebliche Vorteile. Dadurch, dass das Schaftrohr und die Gabelkrone miteinander verbunden sind und dass das Schaftrohr an der Gabelkrone formschlüssig aufgenommen ist, kann eine besonders leichte Konstruktionsweise gewählt werden. Die aus zwei Einzelteilen gebildete Schaftrohreinheit kann einfacher und kostengünstiger hergestellt werden. Außerdem kann der Fertigungsprozess sowohl bei der Herstellung des Schaftrohrs als auch bei der Herstellung der Gabelkrone so ausgestaltet werden, dass eine Verschiebung oder Bewegung der verwendeten Gewebelagen praktisch ausgeschlossen ist. Dadurch kann die Anzahl der zur Herstellung der einzelnen Bauteile verwendeten Gewebelagen reduziert werden, sodass insgesamt eine besonders leichte Schaftrohreinheit und somit Gabelkomponente zur Verfügung gestellt werden kann. Eine solche Schaftrohreinheit ist leichter und stabiler als bei einer konventionellen einteiligen Fertigungsweise.

Gleichzeitig wird dadurch, dass die Gabelkrone und das Schaftrohr formschlüssig miteinander verbunden sind, es erzielt, dass der zwischen dem Schaftrohr und der Gabelkrone wirkende Pressdruck erheblich verringert werden kann, da eine formschlüssige Verbindung zwischen beiden zunächst separat gefertigten Teilen hergestellt wird.

Insgesamt kann eine deutliche leichtere und gleichzeitig sogar noch stabilere Gabelkomponente zur Verfügung gestellt werden.

In einer bevorzugten Weiterbildung sind das Schaftrohr und die Gabelkrone verdrehsicher an einem Aufnahmeabschnitt der Gabelkrone miteinander verbunden. In einem einfachen Fall kann der Aufnahmeabschnitt der Gabelkrone eine Negativform eines Aufnahmebereichs des Schaftrohres aufweisen.

Die Gabelkrone und das Schaftrohr sind insbesondere über eine formschlüssige Aufnahme miteinander verbunden.

In vorteilhaften Weiterbildungen weist das Schaftrohr in einem Aufnahmebereich einen unrunden Außenquerschnitt auf. Der Aufnahmebereich des Schaftrohres ist insbesondere dafür vorgesehen, mit dem Aufnahmeabschnitt der Gabelkrone zusammenzuwirken. Ein unrunder Außenquerschnitt des Schaftrohres kann grundsätzlich beliebig geformt sein. Bevorzugt ist eine ovale oder eine längliche oder eine mehreckige Form, wobei die einzelnen Ecken auch abgerundet sein können.

In bevorzugten Weiterbildungen weist das Schaftrohr an dem Aufnahmebereich einen mehreckigen Außenquerschnitt auf. Möglich ist beispielsweise ein dreieckiger, viereckiger, fünfeckiger, sechseckiger oder achteckiger Außenquerschnitt. Derartige Ausgestaltungen bieten sich insbesondere auch dann an, wenn die Gabelkomponente nicht aus einem Faserverbundwerkstoff, sondern aus Metall hergestellt werden soll. Die Anmelderin behält sich vor, eine solche Gabelkomponente zu beanspruchen, die eine Schaftrohreinheit umfasst, wobei die Schaftrohreinheit ein Schaftrohr und eine Gabelkrone umfasst, und wobei das Schaftrohr und die Gabelkrone als zwei separate Teile ausgebildet sind, die zu der Schaftrohreinheit verbunden sind und wobei das Schaftrohr an der Gabelkrone formschlüssig aufgenommen ist. Bei einer solchen Ausgestaltung können die Schaftrohreinheit und die Gabelkomponente insgesamt wenigstens im Wesentlichen auch aus Metall und insbesondere auch aus einem Leichtmetall bestehen.

In allen Ausgestaltungen ist es möglich, dass das Schaftrohr in dem Aufnahmebereich in axialer Richtung divergierend ausgestaltet ist. Unter "axialer Richtung" wird dabei eine Längsrichtung entlang der axialen Erstreckung des Schaftrohres verstanden.

Das Schaftrohr kann an dem Aufnahmebereich in axialer Richtung konisch ausgestaltet sein, sodass sich das Schaftrohr z.B. zu dem unteren Ende hin konisch erweitert. Das untere Ende des Schaftrohres ist jenes Ende, welches sich im normalen bestimmungsgemäßen Gebrauch der Gabelkomponente unten befindet.

In vorteilhaften Weiterbildungen weisen das Schaftrohr an dem Aufnahmebereich und die Gabelkrone an dem Aufnahmeabschnitt miteinander zusammenwirkende Gewindeabschnitte auf. Beispielsweise ist es möglich, dass das Schaftrohr mit der Gabelkrone verschraubt ist. Dazu wird vorzugsweise ein grobes Gewinde verwendet, bei dem der Abstand zweier Gewindegänge vorzugsweise größer als eine Wandstärke des Schaftrohres ist. Ein solches Gewinde kann auch durch den Faserverbundwerkstoff gebildet werden.

Insbesondere sind die Gewindeabschnitte konisch ausgebildet. Vorzugsweise ist ein Außendurchmesser einer Windung kleiner als ein Innendurchmesser einer anderen Windung. Insbesondere ist ein Außendurchmesser einer Windung kleiner als ein Innendurchmesser einer übernächsten Windung.

In bevorzugten Ausgestaltungen ist es so möglich, den Aufnahmeabschnitt und den Aufnahmebereich ineinander einzuführen, sodass mit nur einer oder zwei Drehungen oder sogar nur einer halben Drehung ein fester Sitz des Schaftrohres an der Gabelkrone vorliegt.

In allen Fällen erstreckt sich die Gabelkrone vorzugsweise quer zu dem Schaftrohr und weist wenigstens eine und insbesondere zwei Gabelbeinaufnahmen oder Standrohraufnahmen auf. Wenn zwei Gabelbeinaufnahmen vorgesehen sind, ist das Schaftrohr insbesondere mittig zwischen den beiden Gabelbeinaufnahmen angeordnet.

In vorteilhaften Weiterbildungen umfasst das Schaftrohr oberhalb der Gabelkrone einen Versteifungsabschnitt. Der Versteifungsabschnitt weist insbesondere eine höhere Steifigkeit in einer Längsrichtung quer zur Erstreckung der Gabelkrone auf. Das bedeutet, dass vorzugsweise das Schaftrohr in Fahrtrichtung eines mit einer solchen Gabelkomponente ausgerüsteten Fahrrads eine höhere Steifigkeit aufweist. Da in dieser Richtung im Betrieb in der Regel höhere Kräfte auftreten als quer dazu, kann das Gesamtgewicht der Gabelkomponente optimiert und reduziert werden.

Es ist möglich und bevorzugt, dass der Versteifungsabschnitt einen in Fahrtrichtung ovalen oder länglichen Querschnitt aufweist.

In bevorzugten Ausgestaltungen weist das Schaftrohr und/oder die Gabelkrone eine Wandung bzw. Wandungen aus einem Faserverbundwerkstoff auf.

Es ist möglich, dass das Schaftrohr und/oder die Gabelkrone wenigstens einen Kern aus einem leichteren Material aufweist. Insbesondere weist die Gabelkrone ein oder mehr im Inneren der Gabelkrone angeordnete Kerne auf, die mit Fasergewebelagen vor der Herstellung bedeckt oder umgeben werden.

Es ist möglich, dass der Kern aus einem Schaummaterial oder dergleichen besteht. Möglich ist es auch, dass der Kern aus einem mit Gas gefüllten Behälter besteht. Dadurch kann das Gewicht reduziert werden und es ist nur dort Material vorhanden, wo es auch benötigt wird.

In allen Ausgestaltungen kann die Gabelkrone einen Lagersitz aufweisen, an dem beispielsweise ein metallischer Ring oder dergleichen in die Gabelkrone eingelassen ist.

Vorzugsweise erstreckt sich radial innerhalb des Lagersitzes ein hülsenförmiger Fortsatz axial nach oben. Der hülsenförmige Fortsatz erhöht die Kontaktfläche zwischen der Gabelkrone und dem Schaftrohr, sodass eine größere Klebefläche und auch eine höhere Steifigkeit der Verbindung und somit der Schaftrohreinheit erzielt wird.

In allen Fällen ist es möglich und bevorzugt, dass das Schaftrohr und die Gabelkrone zunächst als zwei separate Teile ausgebildet werden, die anschließend an einer Klebeaufnahme zu der Schaftrohreinheit miteinander verklebt sind. An der Klebeaufnahme können wenigstens ein Führungsabschnitt und wenigstens ein Klebeabschnitt vorgesehen sein.

Es ist möglich, dass das Schaftrohr und/oder die Gabelkrone an der Klebeaufnahme konisch ausgestaltet sind. Insbesondere sind der Außenbereich des Schaftrohres und der Innenbereich der Gabelkrone an der Klebeaufnahme jeweils leicht konisch ausgebildet. An der Gabelkrone liegt insbesondere ein etwa kegelmantelförmiges Schaftrohr vor. Unter einer leicht konisch ausgebildeten Klebeaufnahme ist hier eine Klebeaufnahme zu verstehen, die eine geringe Konizität mit einem Winkel kleiner als 10° zur Längsachse des Schaftrohres aufweist. Vorzugsweise beträgt ein Winkel der Konizität weniger als 5° und liegt insbesondere zwischen 1° und 4°.

Vorzugsweise ist an wenigstens einer Standrohraufnahme wenigstens ein nach innen ragender Vorsprung ausgebildet. Insbesondere beträgt eine maximale radiale Erstreckung weniger als 1% des Durchmessers der Standrohraufnahme. Die radiale Erstreckung des Vorsprungs ist vorzugsweise kleiner als 0,5 mm und insbesondere größer als 0,05 mm. Vorzugsweise liegt eine maximale radiale Erstreckung zwischen 0,1 und 0,2 mm bei bevorzugten 0,15 mm.

In allen Ausgestaltungen ist es besonders bevorzugt, dass die Wandungen der Schaftrohreinheit und/oder der Gabelkrone wenigstens zum Teil aus mehreren Lagen von ausgehärteten und mit Harz versehenen Fasern, Faserbündeln oder Fasergewebematten bestehen. Dabei können die Fäden des Fasermaterials einzeln oder bündelweise über separate Querfäden in ihrer relativen Lage zueinander fixiert werden. Vorzugsweise werden die mehreren Lagen oder es werden wenigstens zwei Lagen der Fasergewebematten vor dem Einlegen in die Form miteinander vernadelt oder vernäht. Insbesondere werden wenigstens zwei Lagen von Fasergewebematten flächig miteinander verbunden. Es ist möglich, dass die mehreren Lagen der einzelnen Fasern an vielen separaten Stellen miteinander vernadelt sind. Möglich ist auch ein Vernähen oder Verkleben der Fasern oder ganzer Gewebematten miteinander, bevor die Fasergebilde in die Herstellform eingelegt werden.

Es ist möglich und bevorzugt, dass Prepregs verwendet werden. Besonders bevorzugt ist der Einsatz von trockenen Fasergewebematten bzw. Faserlagen, die so keiner Alterung unterliegen und einfach gehandhabt werden können. Anschließend wird in die Form Matrixmaterial in Form von Harz oder dergleichen eingespritzt oder beispielsweise über Vakuum eingezogen, um die Fasern in der Form vollständig mit dem Harz als Matrixmaterial zu tränken.

Vorzugsweise werden Einzelfasern oder zu Schnüren oder dergleichen verbundene Fasern zur Herstellung verwendet. Dabei wird eine Lage aus sehr dünnem und leichtem Stoff als Untergrundlage verwendet. Darauf werden die Fasern wie gewünscht verlegt und jeweils auf der Untergrundlage befestigt. Durch geeignete und insbesondere robotergestützte Verlegung werden die trockenen Fasern wie gewünscht angeordnet. Es wird jeweils lokal die gewünschte Faserstärke gelegt. Die Fasern können dabei gemäß der zu erwartenden Belastung positioniert und verlegt werden. Die überstehenden Teile der Untergrundlage werden vor dem Einlegen in die Form abgeschnitten.

In einer anderen Ausgestaltung weist eine Gabelkomponente für wenigstens teilweise muskelbetriebene Fahrzeuge und insbesondere Zweiräder ein Schaftrohr und eine Gabelkrone auf. Das Schaftrohr und die Gabelkrone sind als zwei separate Teile ausgebildet, die an einer Klebeaufnahme zu einer Schaftrohreinheit miteinander verklebt sind. In der Klebeaufnahme sind insbesondere ein Führungsabschnitt und wenigstens ein Klebeabschnitt vorgesehen. In dem Führungsabschnitt liegen die beiden Bauteile, nämlich das Schaftrohr und die Gabelkrone vorzugsweise vollständig oder im Wesentlichem vollständig aneinander an. In dem wenigstens einen Klebeabschnitt liegt ein geringer und definierter Spalt zwischen dem Schaftrohr und der Gabelkrone vor, der mit dem Klebstoff gefüllt ist, um ein optimales Klebeergebnis zu erzielen. Möglich und bevorzugt ist es, dass auf beiden Seiten eines Führungsabschnitts jeweils ein Klebeabschnitt vorgesehen ist. Möglich ist es auch, dass mehrere Führungsabschnitte und entsprechend auch mehrere Klebeabschnitte vorgesehen sind.

Eine leichte Konizität der miteinander verklebten Bauteile erleichtert die Montage, da beim Einführen des Schaftrohres in die Gabelkrone der aufgetragene Klebstoff nicht von dem Klebeabschnitt abgestreift wird.

Die Anmelderin behält sich vor, eine Gabelkomponente oder Schaftrohreinheit für wenigstens teilweise muskelbetriebene Fahrzeuge und insbesondere Fahrräder zu beanspruchen, bei der die Schaftrohreinheit ein Schaftrohr und eine Gabelkrone umfasst. Das Schaftrohr und die Gabelkrone sind als zwei separate Teile ausgebildet, die zu einer Einheit oder der Schaftrohreinheit verbunden sind. Das Schaftrohr ist an der Gabelkrone formschlüssig aufgenommen.

Weitere Vorteile und Merkmale der vorliegenden Erfindung ergeben sich aus der Beschreibung des Ausführungsbeispiels, das im Folgenden mit Bezug auf die beiliegenden Figuren erläutert wird.

In den Figuren zeigen:
- Fig. 1: eine schematische Ansicht eines mit einer erfindungsgemäßen Gabelkomponente ausgerüsteten Mountain-Bikes;
- Fig. 2: eine erfindungsgemäße Gabelkomponente in einer perspektivischen Darstellung;
- Fig. 3: die Gabelkomponente nach Fig. 2 im Schnitt und eine schematische Darstellung mehrerer Faser- oder Gewebelagen;
- Fig. 4: das Schaftrohr der Gabelkomponente aus Figur 3 in einer perspektivischen Darstellung;
- Fig. 5: einen Schnitt durch das Schaftrohr und die Gabelkrone;
- Fig. 5a: eine Ansicht der Gabelkomponente aus Figur 3 von unten;
- Fig. 5b: den Querschnitt A-A aus Fig. 5a;
- Fig. 5c: das vergrößerte Detail "Y" aus Fig. 5a;
- Fig. 6: eine schematische Vorderansicht einer weiteren Ausführungsform der erfindungsgemäßen Gabelkomponente und drei zugehörige Schnitte;
- Fig. 7: eine weitere erfindungsgemäße Gabelkomponente im Schnitt und zwei dazu senkrechte Querschnitte;
- Fig. 8: einen schematischen Querschnitt durch eine erfindungsgemäße Gabelkomponente mit vergrößerten Details.
- Fig. 9: noch eine erfindungsgemäße Gabelkomponente im Schnitt;
- Fig. 10: das Schaftrohr aus Figur 9 in einer perspektivischen Darstellung; und
- Fig. 11: eine schematische Ansicht eines mit einer erfindungsgemäßen Gabelkomponenten ausgerüsteten Rennrades;

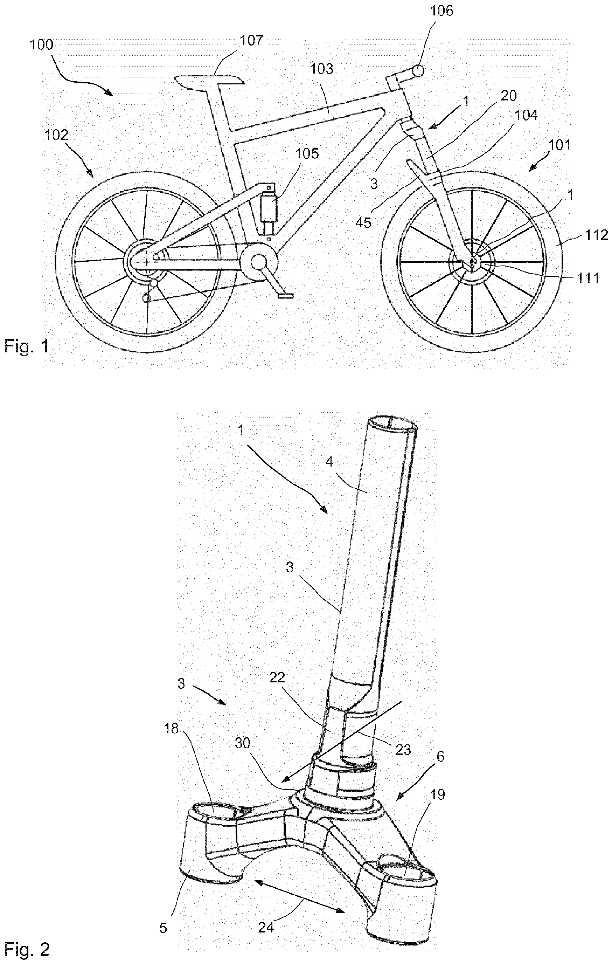

Mit Bezug auf die beiliegenden Figuren 1 bis 11 werden im Folgenden Ausführungsbeispiele der Erfindung erläutert.

In Figur 1 ist eine schematische Darstellung eines Mountainbikes als Fahrrad 100 abgebildet. Das Fahrrad 100 ist mit einem Vorderrad 101 und einem Hinterrad 102 ausgerüstet. Das Fahrrad 100 weist einen Rahmen 103, eine Gabel 104, einen Lenker 106 und einen Sattel 107 auf. Am Vorderrad 101 und am Hinterrad 102 ist jeweils eine Vielzahl an Speichen 109 vorgesehen. Die Felge 110 ist über die Speichen 109 mit der zentralen Nabe verbunden. Am Vorderrad 101 ist hier eine radiale Verspeichung vorgesehen, während an dem Hinterrad 102 die Speichen wenigstens teilweise tangential an der Nabe angeordnet sind, um die Übertragung von Drehmoment zu ermöglichen. Das Vorderrad wird an einer als Federgabel ausgeführten Gabel 104 gefedert gehalten, während für die Dämpfung des Hinterrades ein Dämpfer 105 zur Verfügung steht. Eine Scheibenbremse 111 dient zum Bremsen.

Die Federgabel 104 umfasst eine Schaftrohreinheit 3 als Gabelkomponente 1. An der Gabelkomponente 1 sind Standrohre 20, 21 befestigt. Die Standrohre wirken beweglich mit Tauchrohren einer Tauchrohreinheit 45 zusammen, die die Bewegung der Federgabel dämpfen.

Figur 2 zeigt eine perspektivische schematische Darstellung der erfindungsgemäßen Gabelkomponente 1. An der Gabelkomponente 1 werden Standrohre 20 und 21 befestigt, die mit beweglichen Tauchrohren zusammenwirken, sodass eine vollständige Federgabel 104 entsteht, die beispielsweise an dem Fahrrad nach Figur 1 eingesetzt werden kann.

Es ist erkenntlich, dass der Versteifungsabschnitt 22 in der Längsrichtung 23 eine grössere Abmessung als in der Querrichtung 24 aufweist, um die Steifigkeit dort gezielt zu erhöhen.

Die Schaftrohreinheit 3 besteht hier im Wesentlichen und praktisch vollständig aus wenigstens einem Faserverbundwerkstoff 2. Es ist möglich, dass einige wenige Metallteile oder dergleichen beispielsweise an dem Lagersitz 30 eingearbeitet sind oder aber später dort angebracht werden. Ansonsten besteht die Gabelkomponente 1 aus Faserverbundwerkstoff oder Faserverbundwerkstoffen. Die Schaftrohreinheit 3 besteht aus zwei zunächst separat gefertigten Teilen 4 und 5. Das Teil 4 wird als Schaftrohr 4 ausgebildet und das Teil 5 wird als eine Art von Gabelkrone 5 ausgestaltet, an der das Schaftrohr 4 drehsicher und auch in axialer Richtung 11 fest aufgenommen wird.

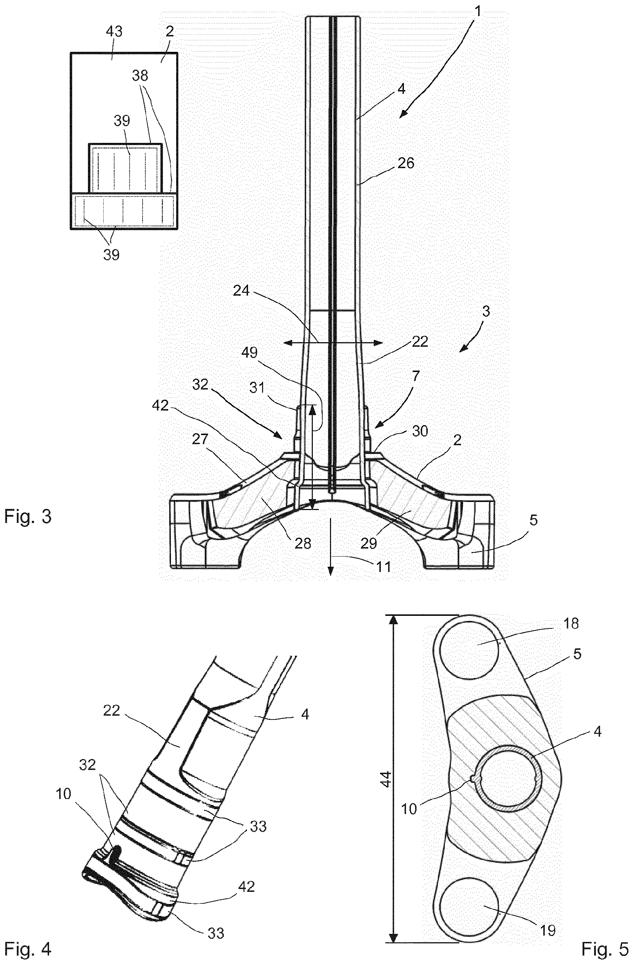

Figur 3 zeigt einen Querschnitt durch die Gabelkomponente 1 nach Fig. 2, die eine Schaftrohreinheit 3 umfasst oder aber aus einer solchen besteht.

Hier ist das Schaftrohr 4 an der Gabelkrone 5 formschlüssig befestigt, sodass nicht nur eine kraftschlüssige, sondern auch eine formschlüssige Verbindung vorliegt. Des Weiteren werden das Schaftrohr 4 und die Gabelkrone 5 miteinander an der Klebeaufnahme 32 verklebt. An der Klebeaufnahme 32 weist das Schaftrohr 4 einen Aufnahmeabschnitt 6 auf, der mit dem Aufnahmebereich 7 der Gabelkrone zusammenwirkt.

Um die Klebewirkung und die Steifigkeit der Schaftrohreinheit 3 zu vergrößern, ist an der Gabelkrone 5 noch ein hülsenförmiger Fortsatz 31 vorgesehen, der sich von dem Lagersitz 30 aus nach oben erstreckt. Das bedeutet, dass im normalen bestimmungsgemäßen Gebrauch sich der hülsenförmige Fortsatz 31 von dem Lagersitz aus nach oben in Richtung des Lenkers erstreckt. Durch den hülsenförmigen Fortsatz 31 wird die Kontakt- und Anlagefläche zwischen dem Schaftrohr 4 und der Gabelkrone 5 erheblich vergrößert.

Im Mittelbereich zwischen 6 und 7 ist insbesondere zur axialen Sicherung des Schaftrohrs 4 in der Krone eine Schulter 42 vorgesehen, um auch bei dauerhaft wechselnder Belastung einen festen Sitz zu ermöglichen.

Dadurch, dass die Schaftrohreinheit 3 aus zwei zunächst separat gefertigten Teilen 4, 5 besteht, kann jedes Teil, nämlich das Schaftrohr 4 und die Gabelkrone 5 einfacher und reproduzierbarer hergestellt werden. Die Fasergewebematten bzw. Faserlagen 38 des Faserverbundwerkstoffes 2 können so für eine ideale Festigkeit des jeweiligen Bauteils positioniert werden. Dadurch, dass das Schaftrohr 4 eine sehr einfache geometrische Form aufweist, ist auch die Positionierung der Faserlagen entsprechend einfach und kann mit hoher Genauigkeit wiederholt werden.

Wird hingegen eine einteilige Schaftrohreinheit direkt in einem einzigen Fertigungsschritt erzeugt, so müssen alle Wandungen 26 des Schaftrohrs 4 und alle Wandungen 27 der Gabelkrone 5 in einem einzigen Fertigungsschritt positioniert und ausgehärtet werden. Da bei dem Aushärten von Faserverbundwerkstoffen meist Druck auf die Fasergewebelagen ausgeübt wird, um das gewünschte Aushärtungsergebnis zu erzielen, sind einfache Fertigungsformen erheblich vorteilhafter als komplizierte geometrische Formen, bei denen während der Aushärtung einzelne Lagen oder Fasern verrutschen können, sodass eine besonders gut reproduzierbare Fertigung nicht oder nur mit extrem großem Aufwand möglich ist.

Es wurde nun festgestellt, dass durch aufblasbare Schläuche z. B. im Inneren ein Innendruck erzeugt wird, der aufgrund der flexiblen Wandung bzw. der Flexibilität des Schlauches insgesamt ein Verrutschen der Faserlagen während des Aushärtens und damit unkontrollierte Änderungen der statischen Eigenschaften bewirken kann. Um dennoch eine ausreichende Steifigkeit und Festigkeit des Bauteils gewährleisten zu können, wurde bislang bei der einteiligen Herstellung in der Praxis die Anzahl der verwendeten Fasergewebelagen in den Übergangspartien erhöht. Dadurch konnte auch bei einer gewissen unkontrollierten Verschiebung der Fasern während des Aushärtens die gewünschte Festigkeit gewährleistet werden.

Dem gegenüber hat die vorliegende Erfindung den Vorteil, dass zwei relativ einfache Bauteile vorgefertigt werden, die einfach und passgenau hergestellt werden können. Nach der Zusammenfügung und dem Verkleben der beiden Teile 4 und 5 wird eine reproduzierbar herstellbare Schaftrohreinheit 3 zur Verfügung gestellt, die durch die formschlüssige Verbindung des Schaftrohrs 4 mit der Gabelkrone 5 auch hohen und höchsten Belastungen zuverlässig standhält. Vorderradgabeln eines Fahrrads sind sicherheitsrelevante Teile, da bei einem Bruch derselben eine hohe Unfallgefahr mit möglicherweise schweren Unfallfolgen vorliegt, weshalb besondere Sorgfalt auf hohe Fertigungskonstanz gelegt werden darf.

Die vorliegende Erfindung ermöglicht eine reproduzierbare und kostengünstige Fertigung von Gabelkomponenten 1, bei denen zusätzlich das Gesamtgewicht reduzierbar ist, da an dem Schaftrohr 4 und der Gabelkrone 5 jeweils nur die für die Festigkeit benötigte Anzahl an Faserlagen 38 verwendet wird.

Dabei können Schaftrohreinheiten 3 für Federgabeln 104 sehr stabil und dennoch leicht hergestellt werden. Solche Schaftrohreinheiten 3 weisen meist Gabelkronen 5 mit einer sehr hohen Breite 44 auf. Die Breite 44 muss dabei so gross sein, dass die für Mountainbikes verwendeten breiten (Profil-)Reifen 112 (vgl. Fig. 1) zwischen den Beinen der Gabel hindurchpassen. Auch muss dann immer noch ein ausreichender Sicherheitsabstand für anhaftenden Schmutz etc. zwischen dem Reifen und den Standrohren verbleiben, damit ein Schleifen des Reifens an der Gabel oder gar eine Blockade des Vorderrades verhindert wird. Gerade bei Federgabeln weist der Bereich der Gabelkrone 5 deshalb eine grosse Quererstreckung auf. Die Breite 44 ist vorzugsweise wenigstens vier Mal so gross und insbesondere wenigstens fünf Mal so gross wie der Durchmesser der Gabelbeinaufnahmen 18 bzw. 19. Durch die große Breite wird eine einteilige Fertigung erheblich erschwert, da die Faserverläufe zwei Umbiegungen von etwa 90° aufweisen. Dadurch wird die Problematik von sich verschiebenden Fasern oder Faserlagen in der Form erheblich vergrößert.

Die Schaftrohreinheit 3 kann in einem mittleren Höhenbereich einen Versteifungsabschnitt 22 aufweisen, der eine höhere Biegesteifigkeit in der Längsrichtung 23 als in Querrichtung 24 aufweist. Die Längsrichtung 23 entspricht bei einer normalen Geradeausfahrt der Fahrtrichtung des Fahrrads. An dem Versteifungsabschnitt 22 liegt somit eine höhere Steifigkeit in der Längsrichtung 23 als in der dazu quer vorgesehenen Querrichtung 24 vor, sodass die Biegesteifigkeit um eine zu der Achse 24 parallele Achse an dem Versteifungsabschnitt 22 erhöht wird.

Das Schaftrohr 4 wird hier zentral an der Gabelkrone 5 an dem Aufnahmeabschnitt 6 aufgenommen. Die Gabelkrone erstreckt sich im Wesentlichen horizontal und quer zu dem Schaftrohr 4 in der Querrichtung 24. An der Gabelkrone 5 ist wenigstens eine Gabelbeinaufnahme zur Aufnahme eines Gabelbeins vorgesehen. Es ist auch möglich, dass ein oder zwei Gabelbeine einstückig mit der Gabelkrone gefertigt werden. Vorzugsweise werden zwei separate Gabelbeine 20 und 21 (vgl. Figur 3) an Gabelbeinaufnahmen 18 und 19 vorgesehen.

Um Material und dadurch Gewicht einzusparen, werden in der Gabelkrone 5 Hohlräume vorgesehen, die mit Kernen 28 ausgefüllt sind. Ein Kern 28 kann insbesondere aus einem Schaummaterial 29 bestehen. Es ist auch möglich, dass mit Gas gefüllte Behälter als Kern 28 verwendet werden. Ein solcher Behälter kann beispielsweise eine Wandung aus einem Schlauchmaterial aufweisen.

Zusätzlich ist in Figur 3 noch eine schematische Abbildung eines Faserverbundwerkstoffes 2 abgebildet, der aus mehreren Lagen 38 von Fasergewebe besteht. Die einzelnen Faserlagen 38 werden vor dem Einlegen in die Form miteinander vernadelt oder über Nähte 39 relativ zueinander fixiert. Dadurch wird sichergestellt, dass in der Form keine Verschiebung der Faserlagen 38 zueinander erfolgt. Dadurch kann die Reproduzierbarkeit erheblich erhöht werden, sodass durch eine optimale Platzierung der einzelnen Faserlagen das Gesamtgewicht nochmals reduziert werden kann.

In Figur 4 ist eine perspektivische Darstellung des unteren Endes des Schaftrohres 4 abgebildet. Im unteren Bereich etwa in der Mitte der Höhe der Gabelkrone ist eine Schulter 42 vorgesehen, die ein Ausziehen aus der Gabelkrone 5 zuverlässig verhindert. Der unrunde Querschnitt 8 ergibt sich durch die Nase 10. Die Nase 10 erstreckt sich hier radial nach aussen und bewirkt eine formschlüssige Verbindung mit der Gabelkrone 5, sodass eine drehfeste Verbindung des Schaftrohres 4 mit der entsprechend ausgestalteten Gabelkrone 5 vorliegt.

Weiterhin sind die Klebeabschnitte 32 und die Führungsabschnitte 33 erkennbar. Es ist auch der unrunde Querschnitt an dem Versteifungsabschnitt 22 zu erkennen.

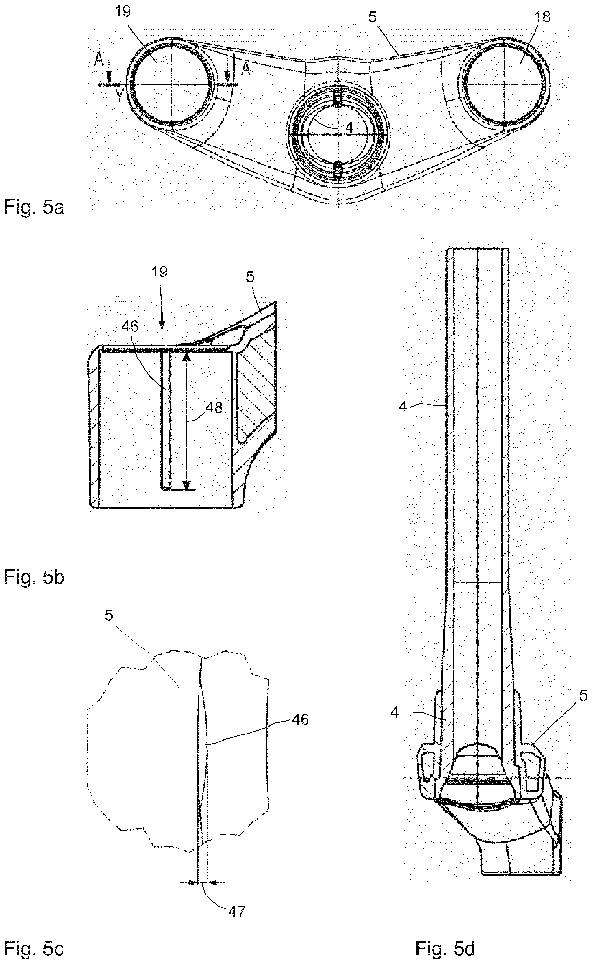

Fig. 5 zeigt einen schematischen Querschnitt durch die Gabelkomponente 1. Klar erkennbar ist die Nase 10, die radial von dem Schaftrohr 4 absteht und eine Verdrehsicherung zur Verfügung stellt.

In Fig. 5a ist eine Ansicht der Gabelkomponente 1 von unten dargestellt, wobei im Wesentlichen die Gabelkrone 5 mit den Standrohraufnahmen 18 und 19 zu sehen ist. Zentral ist das Schaftrohr 4 fest verbunden. Die verschiedenen abgestuften Durchmesser des sich nach unten erweiternden Schaftrohrs sind erkennbar.

Fig. 5b zeigt den Querschnitt A-A aus Fig. 5a durch die Standrohraufnahme 19, die insofern analog zur Standrohraufnahme 18 aufgebaut ist. Im Inneren der Standrohraufnahmen erstrecken sich vorzugsweise vier symmetrisch über dem Umfang verteilt angeordnete Vorsprünge 46 jeweils über eine Umfangsbreite von etwa 1 mm bis 3 mm, vorzugsweise etwa 2mm +/- 10%. Die Vorsprünge 46 sind hier vorzugsweise etwa parallel zu der axialen Richtung 11 ausgerichtet und erstrecken sich über eine Länge 48, die vorzugsweise mehr als die Hälfte und insbesondere mehr als 2 / 3 der axialen Länge einer Standrohraufnahme 18, 19 beträgt. Die axiale Länge beträgt hier etwa 38 mm und damit etwa 5 bis 7 mm weniger als eine axiale Länge einer Standrohraufnahme 18, 19.

In Fig. 5c ist das Detail "Y" aus Fig. 5a dargestellt, in welchem eine Draufsicht auf den Vorsprung 46 erkennbar ist. Der Vorsprung 46 ist in einem horizontalen Querschnitt abgerundet ausgestaltet und weist eine radiale Erstreckung 47 nach innen von zwischen etwa 0,1 mm und 0,2 mm und insbesondere 0,15 mm auf.

Die Vorsprünge 46 dienen bei der Verklebung der Standrohre mit der Gabelkrone 5 zur definierten Bereitstellung eines Klebespaltes, sodass eine optimale Klebewirkung erzielt wird. Fig. 5d zeigt einen Querschnitt durch die Gabelkomponente 1 mit dem sich nach unten hin verbreiternden Schaftrohr 4. In Längsrichtung 23 wird auch die Wandstärke des Schaftrohres nach unten hin stärker. Im untersten Bereich an der Gabelkrone 5 kann die Wandstärke des Schaftrohres 4 in Längsrichtung 23 doppelt so groß sein wie an dem oberen bzw. freien Ende des Schaftrohres 4. Der Wandstärkeunterschied in Längsrichtung 23 kann auch noch größer werden. Dadurch wird eine größere Steifigkeit in der gewünschten Dimension erreicht.

In Querrichtung 24 hingegen verändert sich die Wandstärke des Schaftrohres 4 weniger oder sogar gar nicht.

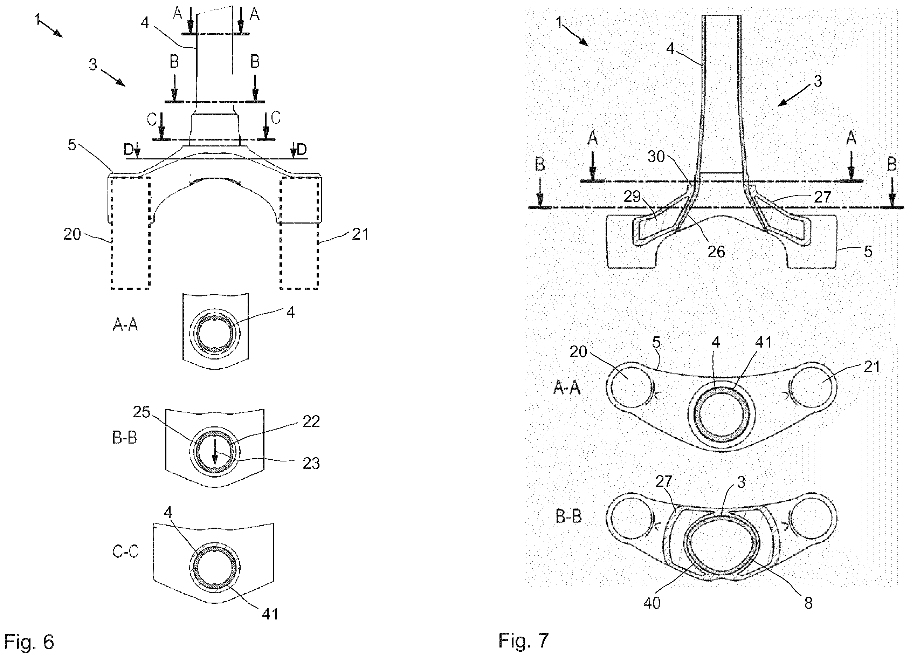

Figur 6 zeigt ein anderes Ausführungsbeispiel einer erfindungsgemäßen Gabelkomponente 1, die eine Schaftrohreinheit 3 mit einem Schaftrohr 4 und einer Gabelkrone 5 umfasst. Zusätzlich sind gestrichelt Standrohre 20 und 21 eingezeichnet, die an Gabelbeinaufnahmen bzw. Standrohraufnahmen 18 und 19 befestigt sind.

Der Schnitt A-A zeigt einen dort im Wesentlichen runden Querschnitt des Schaftrohres 4.

Der Querschnitt B-B in Höhe des Versteifungsabschnitts 22 zeigt einen leicht ovalen Querschnitt des Schaftrohres 4, der eine größere Erstreckung in Längsrichtung 23 aufweist.

Der Querschnitt C-C zeigt den im Bereich des unteren Lagersitzes im Wesentlichen erneut runden Aussenquerschnitt der Einheit 1.

Durch die formschlüssige Verbindung wird sichergestellt, dass sich das Schaftrohr 4 im Betrieb nicht gegenüber der Gabelkrone 5 verdrehen kann, wodurch die Unfallgefahr erheblich reduziert wird. Durch die Einzelteilfertigung des Schaftrohres 4 und der Gabelkrone 5 und die anschließende Verbindung der beiden Teile zu der Schaftrohreinheit 3 können die einzelnen Wandstärken 26 und 27 ideal angepasst werden, sodass insgesamt eine hohe Stabilität bei geringerem Gewicht erzielt wird.

Der Schnitt D-D ist im Prinzip schon in Fig. 5 abgebildet. Durch die unrunde Kontur des Schaftrohres 4 mit der nach außen abstehenden Nase 10 sowie der entsprechenden Ausnehmung in der Gabelkrone 5 wird eine drehfeste Verbindung der Schaftrohreinheit 3 gewährleistet.

Figur 7 zeigt noch ein Ausführungsbeispiel einer erfindungsgemäßen Gabelkomponente 1, die als Schaftrohreinheit 3 ausgeführt ist. Das Schaftrohr 4 ist in dem Aufnahmeabschnitt 6 hier nach unten hin divergierend ausgeführt. Dadurch wird eine höhere Verbindungs- und Klebefläche zwischen dem Schaftrohr 4 und der Gabelkrone 5 ermöglicht.

Weiterhin liegt in dem Aufnahmeabschnitt 6 ein unrunder Querschnitt 8 des Schaftrohres 4 vor, wobei das Schaftrohr 4 im Bereich des unrunden Querschnitts 8 eine größere Erstreckung in Querrichtung 24 als in Längsrichtung 23 aufweist.

Wie zuvor kann die Gabelkrone 5 Hohlräume aufweisen, die jeweils mit einem Kern oder mit mehreren Kernen 28 aus z.B. einem Schaummaterial 29 gefüllt sind. Die Kerne 28 können nach der Fertigstellung entfernt werden. Es ist aber auch möglich, dass die Kerne aus z.B. Schaummaterial 29 dauerhaft in der Schaftrohreinheit 3 verbleiben. Die Schaftrohreinheit 3 bzw. das Schaftrohr 4 kann im Bereich des Lagersitzes 30 einen runden Querschnitt 41 aufweisen. Im Bereich des Aufnahmeabschnittes 6 bzw. des Aufnahmebereiches 7 liegen aufeinander angepasste Querschnitte des Schaftrohres 4 und der Gabelkrone 5 vor, die, wie der Querschnitt B-B zeigt, unrund ausgeführt sind.

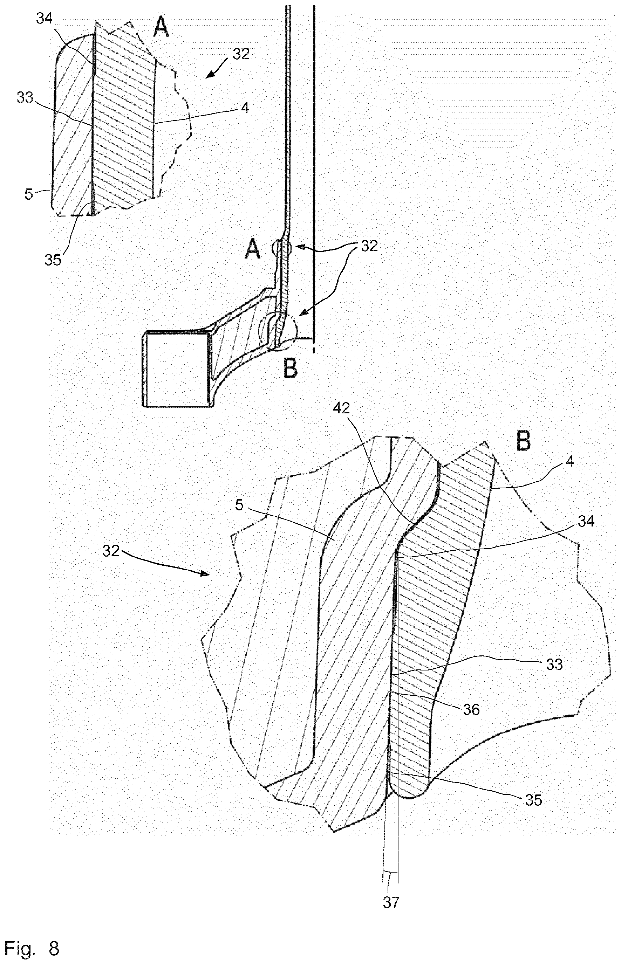

Figur 8 zeigt mögliche Details der vorhergehenden Ausführungsbeispiele der Gabelkomponente 1, umfassend eine Schaftrohreinheit 3 mit einem Schaftrohr 4 und einer Gabelkrone 5. Insbesondere zeigen die Details A und B von Fig. 8 auch die vergrößerten Ausgestaltungen Aufnahmeabschnitts 6 bzw. des Aufnahmebereiches 7 der Gabelkomponente aus Fig. 3 oder auch Fig. 6 oder Fig. 7.

Wie das vergrößerte Detail A zeigt, ist im oberen Bereich des Aufnahmeabschnitts 6 bzw. des Aufnahmebereiches 7 eine erste Klebeaufnahme 32 vorgesehen, die einen Führungsabschnitt 33 und zwei Klebeabschnitte 34 und 35 umfasst, die sich oberhalb und unterhalb des Führungsabschnitts 33 erstrecken. An dem Führungsabschnitt 33 liegen die Bauteile 4, 5 vorzugsweise direkt aneinander an. In den Bereichen der Klebeabschnitte 34 und 35 wird ein geringer und definierter Spalt zur Verfügung gestellt, der mit Klebstoff gefüllt ist und für eine besonders zuverlässige Klebung an der Klebeaufnahme 32 sorgt. Die Spaltweite ist insbesondere geringer als eine Wandstärke des Schaftrohres 4 und liegt vorzugsweise zwischen 10 µm und 500 µm und ist insbesondere kleiner als 250 µm.

Analog zu der oberen Klebeaufnahme 32 ist eine untere Klebeaufnahme 32 vorgesehen, die vergrößert durch das Detail "B" abgebildet ist. Die untere Klebeaufnahme 32 weist einen Führungsabschnitt 33 und benachbart dazu Klebeabschnitte 34 und 35 auf. An den Klebeabschnitten 34 und 35 liegt wiederum ein definierter Spalt vor, der mit Klebstoff gefüllt ist und für eine zuverlässige Verklebung der beiden Bauteile sorgt.

Um ein Einführen des Schaftrohrs 4 in die Gabelkrone 5 so zu gewährleisten, dass kein Klebstoff von den Klebeabschnitten 34, 35 abgestreift wird, werden die Klebeaufnahmen 32 vorzugsweise leicht konisch ausgeführt. Ein Winkel 37 zwischen einer zentralen Achse des Schaftrohrs 4 und der Gabelkrone 5 und den Kontaktflächen an den Führungsabschnitten 33 und den Klebeabschnitten 34, 35 liegt vorzugsweise zwischen 0° und 10° und insbesondere zwischen 1° und 5° und besonders bevorzugt bei etwa 2 bis 3°.

Auch bei diesem Ausführungsbeispiel ist es möglich, dass in dem Bereich der Klebeaufnahme 32 wenigstens ein unrunder Außenquerschnitt 8 vorliegt, um eine formschlüssige Verbindung des Schaftrohrs 4 und der Gabelkrone 5 z. B. über nach außen abstehende Nasen zu gewährleisten.

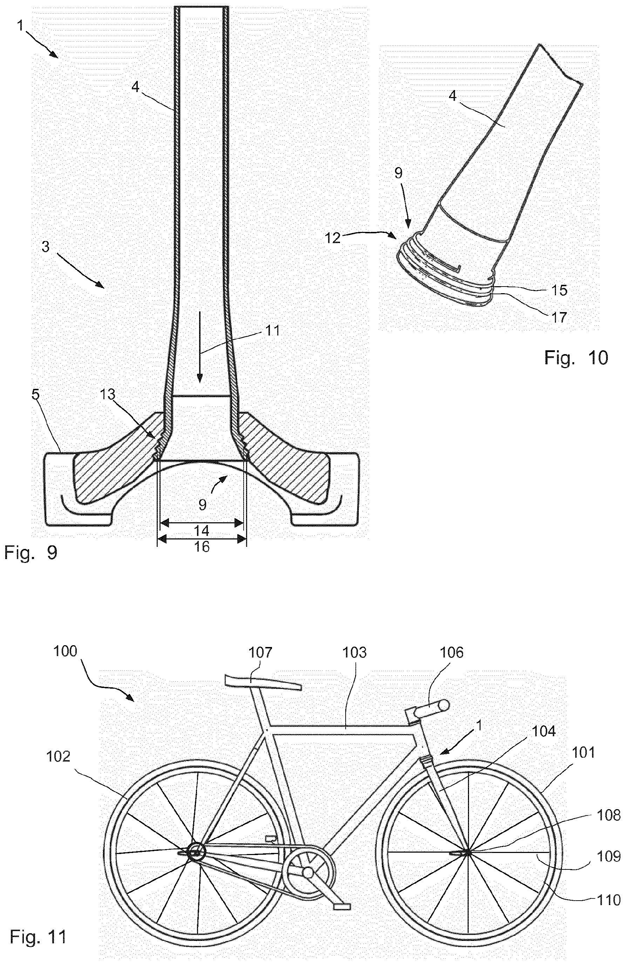

Figur 9 zeigt ein weiteres Ausführungsbeispiel einer erfindungsgemäßen Gabelkomponente 1, die hier wiederum als Schaftrohreinheit 3 ausgebildet ist. Die einteilige Schaftrohreinheit 3 besteht aus dem Schaftrohr 4 und der Gabelkrone 5, die hier jeweils wieder aus Faserverbundwerkstoff g. Vorzugsweise wird der gleiche Faserverbundwerkstoff für beide Bauteile 4, 5 verwendet.

In allen Ausführungsbeispielen ist es möglich, dass der gleiche Faserverbundwerkstoff für die Bauteile 4, 5 verwendet wird. Möglich ist es aber auch, dass unterschiedliche Faserverbundwerkstoffe eingesetzt werden. Dabei können teilweise oder vollständig das gleiche Fasermaterial und unterschiedliche Matrixmaterialien und/oder aber unterschiedliche Fasermaterialien und gleiche Matrixmaterialien eingesetzt werden.

Auch bei dem Ausführungsbeispiel gemäß Figur 9 verbreitert sich das Schaftrohr 4 an dem Aufnahmeabschnitt 6 konusförmig nach unten hin. An dem Aufnahmeabschnitt 6 bzw. dem Aufnahmebereich 7 weisen die Bauteile 4, 5 miteinander zusammenwirkende Gewindeabschnitte 12, 13 auf, sodass an dem Schaftrohr 4 ein Außengewinde 12 und in der Gabelkrone 5 ein Innengewinde 13 vorgesehen sind. Die Gewindeabschnitte 12, 13 sind auf einem Konus 9 angeordnet. Dabei weist der Konus einen solchen Winkel auf, dass insbesondere direkt benachbarte Windungen des Gewindes derartig unterschiedliche Durchmesser aufweisen, dass nur eine halbe oder eine ganze Drehung des Schaftrohrs 4 ausreicht, um nach dem Einführen des Schaftrohrs 4 in die Gabelkrone 5 einen festen Sitz des Schaftrohrs 4 an der Gabelkrone 5 zu gewährleisten. Dadurch wird ebenfalls eine formschlüssige Verbindung hergestellt, die durch zusätzlichen Klebstoff vor einem unabsichtlichen Lösen geschützt werden kann.

Es ist möglich, dass der Außendurchmesser 14 einer Windung 15 eine kleinere Abmessung aufweist als der Innendurchmesser 16 der übernächsten axial benachbarten Windung 17.

Auch hier ist es möglich, dass in der Gabelkrone Hohlräume vorgesehen sind, die mit Kernen gefüllt sein können.

Figur 10 zeigt eine schematische perspektivische Darstellung des mit einem Gewinde versehenen Schaftrohres 4.

In Figur 11 ist ein als Touren- oder Rennrad ausgeführtes Fahrrad 100 dargestellt, welches mit einem Vorderrad 101 und einem Hinterrad 102 ausgerüstet ist. Das Fahrrad weist einen Rahmen 103, eine Gabel 104, einen Lenker 106 und einen Sattel 107 auf. Am Vorderrad 101 und am Hinterrad 102 ist jeweils eine Vielzahl an Speichen 109 vorgesehen. Die Felge 110 ist jeweils über die Speichen 109 mit der zentralen Nabe verbunden. Am Vorderrad 101 ist hier eine radiale Verspeichung vorgesehen, während an dem Hinterrad 102 die Speichen wenigstens teilweise tangential an der Nabe angeordnet sind, um die Übertragung von Drehmoment zu ermöglichen. Die Gabel 104 umfasst eine Standrohreinheit 3, wie sie zuvor beschrieben wurde. Auch an einem Rennrad kann eine solche Gabelkomponente 1 eingesetzt werden.

**Bezugszeichenliste:**

| | | | |
|---|---|---|---|
| 1 | Gabelkomponente | 33 | Führungsabschnitt |
| 2 | Faserverbundwerkstoff | 34 | Klebeabschnitt |
| 3 | Schaftrohreinheit | 35 | Klebeabschnitt |
| 4 | Schaftrohr | 36 | Außenbereich |
| 5 | Gabelkrone | 37 | Winkel |
| 6 | Aufnahmeabschnitt von 5 | 38 | Lage, Fasergewebematte |
| 7 | Aufnahmebereich von 4 | 39 | Naht |
| 8 | unrunder Querschnitt | 40 | unrunder Querschnitt |
| 9 | Konus | 41 | runder Querschnitt |
| 10 | Nase | 42 | schulterförmige Erweiterung |
| 11 | axiale Richtung | | |
| 12 | Gewindeabschnitt an 4 | 43 | Grundlage |
| 13 | Gewindeabschnitt an 5 | 44 | Breite |
| 14 | Außendurchmesser von 15 | 45 | Tauchrohreinheit |
| 15 | Windung | 46 | Vorsprung |
| 16 | Innendurchmesser von 17 | 47 | Erstreckung |
| 17 | Windung | 48 | Länge |
| 18 | Standrohraufnahme | 49 | Länge |
| 19 | Standrohraufnahme | 100 | Fahrrad |
| 20 | Gabelbein | 101 | Vorderrad |
| 21 | Gabelbein | 102 | Hinterrad |
| 22 | Versteifungsabschnitt | 103 | Rahmen |
| 23 | Längsrichtung | 104 | Gabel, Federgabel |
| 24 | Querrichtung | 105 | Dämpfer |
| 25 | Querschnitt von 22 | 106 | Lenker |
| 26 | Wandung | 107 | Sattel |
| 27 | Wandung | 108 | Nabe |
| 28 | Kern | 109 | Speichen |
| 29 | Schaummaterial | 110 | Felge |
| 30 | Lagersitz | 111 | Scheibenbremse |
| 31 | hülsenförmiger Fortsatz | 112 | Reifen |
| 32 | Klebeaufnahme | | |

## Patentansprüche

1. Gabelkomponente (1) für ein wenigstens teilweise muskelbetriebenes Fahrzeug und insbesondere Fahrrad (100) mit einer wenigstens teilweise aus Faserverbundwerkstoff (2) bestehenden Schaftrohreinheit (3), wobei die Schaftrohreinheit (3) ein Schaftrohr (4) und eine Gabelkrone (5) umfasst, welche als zwei separate und formschlüssig miteinander zu einer Schaftrohreinheit (3) verbundene Teile ausgebildet sind, wobei relativ zur Längsachse (11) das Schaftrohr (4) und die Gabelkrone (5) verdrehsicher an einem Aufnahmeabschnitt (6) der Gabelkrone (5) miteinander verbunden sind,
**dadurch gekennzeichnet,**
**dass** das Schaftrohr (4) an einem Aufnahmebereich (7) wenigstens eine nach außen abstehende Nase (10) aufweist
und **dass** die Gabelkrone (5) eine Wandung (26, 27) aus einem Faserverbundwerkstoff (2) und wenigstens einen Kern (28) aus einem leichteren Material aufweist.

2. Gabelkomponente (1) nach Anspruch 1, wobei das Schaftrohr (4) in dem Aufnahmebereich (7) einen unrunden und/oder mehreckigen Außenquerschnitt (8) aufweist.

3. Gabelkomponente (1) nach einem der vorhergehenden Ansprüche, wobei das Schaftrohr (4) an dem Aufnahmebereich (7) und die Gabelkrone (5) an dem Aufnahmeabschnitt (6) aneinander angepasste Querschnitte aufweisen.

4. Gabelkomponente (1) nach einem der vorhergehenden Ansprüche, wobei das Schaftrohr (4) und die Gabelkrone (5) der Schaftrohreinheit (3) in einer axialen Richtung (11) des Schaftrohrs (4) formschlüssig miteinander verbunden sind.

5. Gabelkomponente (1) nach einem der vorhergehenden Ansprüche, wobei das Schaftrohr (4) an dem Aufnahmebereich (7) in axialer Richtung (11) konisch oder divergierend ausgestaltet ist.

6. Gabelkomponente (1) nach einem der vorhergehenden Ansprüche, wobei sich die Gabelkrone (5) quer zu dem Schaftrohr (4) erstreckt und wobei die Gabelkrone (5) wenigstens eine Gabelbeinaufnahme (18, 19) aufweist und/oder wobei die Gabelkrone (5) zwei Gabelbeinaufnahmen (18, 19) umfasst, zwischen denen das Schaftrohr (4) an der Gabelkrone (5) aufgenommen ist.

7. Gabelkomponente (1) nach einem der vorhergehenden Ansprüche, wobei das Schaftrohr (4) oberhalb der Gabelkrone (5) einen Versteifungsabschnitt (22) umfasst, welcher eine höhere Steifigkeit in einer Längsrichtung (23) quer zu der Erstreckung der Gabelkrone (5) aufweist und wobei der Versteifungsabschnitt (22) insbesondere einen ovalen oder länglichen Querschnitt (25) aufweist.

8. Gabelkomponente (1) nach einem der vorhergehenden Ansprüche, wobei das Schaftrohr (4) eine Wandung (26, 27) aus einem Faserverbundwerkstoff (2) und wenigstens einen Kern (28) aus einem leichteren Material aufweist.

9. Gabelkomponente (1) nach einem der vorhergehenden Ansprüche, wobei an dem Schaftrohr (4) eine schulterförmige Erweiterung vorgesehen ist und/oder wobei an der Gabelkrone (5) ein Lagersitz (30) vorgesehen ist und wobei sich radial innerhalb des Lagersitzes (30) ein hülsenförmiger Fortsatz (31) axial nach oben erstreckt.

10. Gabelkomponente (1) nach einem der vorhergehenden Ansprüche, wobei das Schaftrohr (4) und die Gabelkrone (5) als zwei separate Teile ausgebildet sind, die an einer Klebeaufnahme (32) zu der Schaftrohreinheit (3) miteinander verklebt sind, wobei an der Klebeaufnahme (32) ein Führungsabschnitt (33) und wenigstens ein Klebeabschnitt (34, 35) vorgesehen sind und wobei insbesondere das Schaftrohr (4) und/oder die Gabelkrone (5) an der Klebeaufnahme (32) konisch ausgestaltet sind, und wobei insbesondere zumindest abschnittsweise der Außenbereich (36) des Schaftrohres (4) und der Innenbereich (37) der Gabelkrone (5) an der Klebeaufnahme (32) jeweils leicht konisch ausgebildet sind und wobei vorzugsweise ein Winkel (37) der Konizität kleiner 5° beträgt und insbesondere zwischen 1° und 4° liegt.

11. Gabelkomponente (1) nach einem der vorhergehenden Ansprüche, wobei an wenigstens einer Standrohraufnahme (18, 19) wenigstens ein nach innen ragender Vorsprung (46) ausgebildet ist.

12. Gabelkomponente (1) nach einem der vorhergehenden Ansprüche, wobei Wandungen (26, 27) der Schaftrohreinheit (3) wenigstens zum Teil aus mehreren Lagen (38) von ausgehärteten und mit Harz versehenen Faserlagen bestehen, die miteinander vernadelt oder vernäht sind, wobei die mehreren Lagen (38) der Fasern insbesondere flächig miteinander verbunden sind.

13. Gabelkomponente (1) für wenigstens teilweise muskelbetriebene Fahrzeuge und insbesondere Zweiräder (100) mit einem Schaftrohr (4) und einer Gabelkrone (5), wobei das Schaftrohr (4) und die Gabelkrone (5) als zwei separate Teile ausgebildet sind, die an einer Klebeaufnahme (32) zu einer Schaftrohreinheit (3) miteinander verklebt sind,
**dadurch gekennzeichnet, dass**
an der Klebeaufnahme (32) wenigstens ein Führungsabschnitt (33) und wenigstens ein Klebeabschnitt (34, 35) vorgesehen sind, wobei in dem Führungsabschnitt (33) das Schaftrohr (4) und die Gabelkrone (5) vollständig aneinander anliegen und wobei in dem Klebeabschnitt (34, 35) ein geringer und definierter Spalt zwischen dem Schaftrohr (4) und der Gabelkrone (5) vorliegt, der mit dem Klebstoff gefüllt ist.

## Claims

1. Fork component (1) for an at least partially muscle-powered vehicle and in particular a bicycle (100) having a fork column unit (3) consisting at least in part of a fibrous composite material (2),
wherein the fork column unit (3) comprises a fork column (4) and a fork crown (5) configured as two separate parts connected with one another by form-fit to form the fork column unit (3), wherein the fork column (4) and the fork crown (5) are connected to one another non-rotatably relative to the longitudinal axis (11) on an accommodation section (6) of the fork crown (5),
**characterized in**
**that** the fork column (4) shows at least one lug (10) projecting outwardly in an accommodation region (7) and that the fork crown (5) comprises a wall (26, 27) of a fibrous composite material (2) and at least one core (28) of a more lightweight material.

2. The fork component (1) according to claim 1, wherein the fork column (4) shows a non-round and/or polygonal outer cross-section (8) in the accommodation region (7).

3. The fork component (1) according to any of the preceding claims, wherein the cross-section in the accommodation region (7) of the fork column (4) is mated to the cross-section in the accommodation section (6) of the fork crown (5).

4. The fork component (1) according to any of the preceding claims, wherein the fork column (4) and the fork crown (5) of the fork column unit (3) are connected with one another by form-fit in an axial direction (11) of the fork column (4).

5. The fork component (1) according to any of the preceding claims, wherein the fork column (4) is configured cone-shaped or diverging in the axial direction (11) in the accommodation region (7).

6. The fork component (1) according to any of the preceding claims, wherein the fork crown (5) extends transverse to the fork column (4) and wherein the fork crown (5) comprises at least one fork leg accommodation (18, 19), and/or wherein the fork crown (5) comprises a pair of fork leg accommodations (18, 19) between which the fork column (4) is received on the fork crown (5).

7. The fork component (1) according to any of the preceding claims, wherein above the fork crown (5) the fork column (4) comprises a reinforcing section (22) showing higher rigidity in a longitudinal direction (23) transverse to the extension of the fork crown (5), and wherein the reinforcing section (22) is in particular oval or elongated in cross-section (25).

8. The fork component (1) according to any of the preceding claims, wherein the fork column (4) comprises a wall (26, 27) of a fibrous composite material (2), and at least one core (28) of a more lightweight material.

9. The fork component (1) according to any of the preceding claims, wherein the fork column (4) is provided with a shoulder-like expansion, and/or wherein the fork crown (5) is provided with a bearing seat (30), and wherein a sleeve-like appendix (31) extends axially upwardly, radially inwardly of the bearing seat (30) .

10. The fork component (1) according to any of the preceding claims, wherein the fork column (4) and the fork crown (5) are configured as two separate parts which are glued to one another in an adhesive accommodation (32) to form the fork column unit (3), wherein the adhesive accommodation (32) is provided with a guiding section (33) and at least one adhesive section (34, 35), and wherein in particular the fork column (4) and/or the fork crown (5) are configured cone-shaped in the adhesive accommodation (32), and wherein in particular at least sections of the external area (36) of the fork column (4) and of the internal area (37) of the fork crown (5) are configured slightly cone-shaped in the adhesive accommodation (32), and wherein a taper angle (37) is preferably less than 5° and in particular between 1° and 4°.

11. The fork component (1) according to any of the preceding claims, wherein at least one inwardly protruding projection (46) is configured at least at one inner tube accommodation (18, 19).

12. The fork component (1) according to any of the preceding claims, wherein at least parts of the walls (26, 27) of the fork column unit (3) consist of multiple layers (38) of cured, resin-treated fiber layers which are pinned or sewn to one another, wherein the multiple layers (38) of the fibers are two-dimensionally connected with one another.

13. Fork component (1) for at least partially muscle-powered vehicles and in particular bicycles (100) having a fork column (4) and a fork crown (5), wherein the fork column (4) and the fork crown (5) are configured as two separate parts glued to one another in an adhesive accommodation (32) to form a fork column unit (3),
**characterized in that**
the adhesive accommodation (32) is provided with at least one guiding section (33) and at least one adhesive section (34, 35), wherein in the guiding section (33) the fork column (4) and the fork crown (5) lie entirely snugly adjacent to one another, and wherein in the adhesive section (34, 35) there is a slight, defined gap between the fork column (4) and the fork crown (5), that is filled with the adhesive.

## Revendications

1. Composante de fourche (1) pour un véhicule entraîné au moins partiellement par force musculaire et notamment une bicyclette (100), dotée d'une unité à hampe tubulaire (3) composée au moins partiellement de matériau composite à fibres (2),
dans laquelle ladite unité à hampe tubulaire (3) comprend une hampe tubulaire (4) et une tête de fourche (5) qui sont réalisées en tant que deux pièces séparées et solidarisées l'une à l'autre par complémentarité de forme en une unité à hampe tubulaire (3), dans laquelle la hampe tubulaire (4) et la tête de fourche (5) sont reliées l'une à l'autre à une portion de réception (6) de la tête de fourche (5) de manière anti-rotative par rapport à l'axe longitudinal (11), **caractérisée en ce**
**que** la hampe tubulaire (4) présente, à une zone de réception (7), au moins un ergot (10) en saillie vers l'extérieur et que la tête de fourche (5) présente une paroi (26, 27) dans un matériau composite à fibres (2) et au moins un noyau (28) dans un matériau plus léger.

2. Composante de fourche (1) selon la revendication 1, dans laquelle la hampe tubulaire (4) présente dans la zone de réception (7) une section droite extérieure (8) non circulaire et/ou polygonale.

3. Composante de fourche (1) selon l'une quelconque des revendications précédentes, dans laquelle la hampe tubulaire (4), à la zone de réception (7), et la tête de fourche (5) à la portion de réception (6) présentent des sections droites adaptées les unes aux autres.

4. Composante de fourche (1) selon l'une quelconque des revendications précédentes, dans laquelle la hampe tubulaire (4) et la tête de fourche (5) de l'unité à hampe tubulaire (3) sont solidarisées l'une à l'autre par complémentarité de forme dans un sens axial (11) de la hampe tubulaire (4).

5. Composante de fourche (1) selon l'une quelconque des revendications précédentes, dans laquelle la hampe tubulaire (4) est conçue conique ou divergente dans le sens axial (11) à la zone de réception (7).

6. Composante de fourche (1) selon l'une quelconque des revendications précédentes, dans laquelle la tête de fourche (5) s'étend à la transversale de la hampe tubulaire (4) et dans laquelle la tête de fourche (5) présente au moins une réception pour jambe de fourche (18, 19) et/ou la tête de fourche (5) comprend deux réceptions pour jambe de fourche (18, 19) entre lesquelles la hampe tubulaire (4) est montée à la tête de fourche (5).

7. Composante de fourche (1) selon l'une quelconque des revendications précédentes, dans laquelle la hampe tubulaire (4) comprend au-dessus de la tête de fourche (5) une portion de raidissage (22) qui présente une rigidité supérieure dans un sens longitudinal (23) transversal au sens d'étendue de la tête de fourche (5), et dans laquelle la portion de raidissage (22) présente notamment une section droite (25) ovale ou oblongue.

8. Composante de fourche (1) selon l'une quelconque des revendications précédentes, dans laquelle la hampe tubulaire (4) présente une paroi (26, 27) dans un matériau composite à fibres (2) et au moins un noyau (28) dans un matériau plus léger.

9. Composante de fourche (1) selon l'une quelconque des revendications précédentes, dans laquelle est prévu un rallongement en forme d'épaule à la hampe tubulaire (4) et/ou dans laquelle est prévu un siège de palier (30) à la tête de fourche (5), et dans laquelle un prolongement (31) de forme conique s'étend radialement à l'intérieur du siège de palier (30), axialement vers le haut.

10. Composante de fourche (1) selon l'une quelconque des revendications précédentes, dans laquelle la hampe tubulaire (4) et la tête de fourche (5) sont réalisées en tant que deux pièces séparées qui sont collées l'une à l'autre à un point de collage (32) pour former l'unité à hampe tubulaire (3), dans laquelle une portion de conduite (33) et au moins une portion de collage (34, 35) sont prévues au point de collage (32), et dans laquelle notamment la hampe tubulaire (4) et/ou la tête de fourche (5) sont conçues de forme conique au point de collage (32), et dans laquelle notamment au moins par endroit la zone extérieure (36) de la hampe tubulaire (4) et la zone intérieure (37) de la tête de fourche (5) sont réalisées, au point de collage (32), chacune de forme légèrement conique, et au moins de préférence un angle (37) de la conicité étant inférieur à 5° et mesurant notamment entre 1° à 4°.

11. Composante de fourche (1) selon l'une quelconque des revendications précédentes, un avancement (46) en saillie vers l'intérieur étant constitué à au moins une réception de tube montant (18, 19).

12. Composante de fourche (1) selon l'une quelconque des revendications précédentes, dans laquelle des parois (26, 27) de l'unité à hampe tubulaire (3) se constituent au moins partiellement de plusieurs couches (38) de couches fibreuses durcies et pourvues de résine qui sont piquées ou cousues les unes aux autres, dans laquelle les plusieurs couches (38) des fibres sont reliées les unes aux autres notamment sur leur surface.

13. Composante de fourche (1) pour véhicule entraîné au moins partiellement par force musculaire et notamment deux-roues (100), doté d'une hampe tubulaire (4) et d'une tête de fourche (5),
dans laquelle la hampe tubulaire (4) et la tête de fourche (5) sont réalisées en tant que deux pièces qui sont collées l'une à l'autre à un point de collage (32) pour former une unité à hampe tubulaire (3),
**caractérisée en ce que**
au point de collage (32), au moins une portion de conduite (33) et au moins une portion de collage (34, 35) sont prévues, dans laquelle la hampe tubulaire (4) et la tête de fourche (5) sont entièrement accolées l'une à l'autre dans la portion de conduite (33), et dans laquelle il y a présence d'une légère fente définie, dans la portion de collage (34, 35), entre la hampe tubulaire (4) et la tête de fourche (5), laquelle fente est remplie de colle.
